# EUROPEAN PATENT APPLICATION

(11) **EP 4 579 120 A1**
(43) Date of publication of application: **02.07.2025**
(21) Application number: 24223434.2
(22) Date of filing: 27.12.2024
(51) Int. Cl.: F17C 3/04, F17C 3/08

(54) **COMPOSITE STORAGE TANK FOR LIQUID HYDROGEN**

(30) Priority: 29.12.2023 US 202363616105 P
(71) Applicant: General Electric Company, Cincinnati, Ohio 45215 (US)
(72) Inventor: ZHENG, Li, 12309 Niskayuna (US); KRAY, Nicholas, 45069 West Chester (US); SUN, Changjie, 12309 Niskayuna (US); BARUA, Ananda, 12309 Niskayuna (US); GEMEINHARDT, Gregory, 45215 Evendale (US)
(74) Representative: Openshaw & Co.

(57) **Abstract**

A composite hydrogen storage tank (212) for storing liquid hydrogen incudes a multilayer composite wall (400, 402). The multilayer composite wall (400, 402) defines a chamber (250) and includes an inner composite layer (412), an outer composite layer (414), and a plurality of insulating layers (420) between the inner composite layer (412) and the outer composite layer (414). A hydrogen barrier layer (430) is formed on an inner surface of the inner composite layer (412). Each of the inner composite layer (412) and the outer composite layer (414) including a plurality of reinforcing fiber tows surrounded by a matrix. The outer composite layer (414) forms an exterior of the composite hydrogen storage tank (212).

## Description

### CROSS REFERENCE TO RELATED APPLICATIONS

The present application claims the benefit of Provisional Patent Application No. 63/616,105, filed on December 29, 2023, which is hereby incorporated by reference herein in its entirety.

### TECHNICAL FIELD

The present disclosure relates to composite hydrogen storage tanks for storing liquid hydrogen, particularly, composite hydrogen storage tanks for aircraft.

### BACKGROUND

The propulsion system for commercial aircraft typically includes one or more aircraft engines, such as turbofan jet engines. These engines may be powered by aviation turbine fuel, which is, typically, a combustible hydrocarbon liquid fuel, such as a kerosene-type fuel, having a desired carbon number and carbon-to-hydrogen ratio. Such fuel produces carbon dioxide upon combustion, and improvements to reduce or to eliminate such carbon dioxide emissions in commercial aircraft are desired.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic view of an aircraft having a hydrogen fuel system.
FIG. 2 is a schematic, cross-sectional view of one of the turbine engines of the aircraft shown in FIG. 1.
FIG. 3 is a schematic, cross-sectional view of a pipe for conveying liquid hydrogen that may be a part of the fuel system of the aircraft shown in FIG. 1.
FIGS. 4A, 4B, 4C, and 4D are cross-sectional, detail views of the wall of a pipe for conveying liquid hydrogen. FIG. 4A shows detail 4A in FIG. 3. FIGS. 4B, 4C, and 4D are cross-sectional, detail views similar to FIG. 4A showing alternative layer arrangements of the wall of the pipe.
FIG. 5 is schematic view of a composite hydrogen storage tank.
FIG. 6 is a cross section of the composite hydrogen storage tank shown in FIG. 5 taken along line 6-6 in FIG. 5.
FIG. 7A is a cross-sectional, detail view of the wall of a composite hydrogen storage tank shown in FIG. 6, showing detail 7A of FIG. 6. FIG. 7B is a cross-sectional detail view similar to FIG. 7A showing an alternative layer arrangement of the wall of the composite hydrogen storage tank.
FIG. 8 is a partial cross-sectional view of the composite hydrogen storage tank.
FIG. 9 is another cross-sectional view of the composite hydrogen storage tank.
FIG. 10 is a flow chart of a process for manufacturing the composite hydrogen storage tank.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, a "hydrogen fuel" is a combustible composition or a compound that includes diatomic hydrogen. More specifically, the hydrogen fuel can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the hydrogen fuel can consist essentially of diatomic hydrogen. The hydrogen fuel can exist in one or more phases such as a liquid phase, a gaseous phase, or combinations thereof.

As used herein, a "liquid hydrogen" is diatomic hydrogen substantially completely in the liquid phase. The liquid hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the liquid hydrogen can consist essentially of diatomic hydrogen.

As used herein, a "gaseous hydrogen" is diatomic hydrogen substantially completely in the gaseous phase. The gaseous hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the gaseous hydrogen can consist essentially of diatomic hydrogen.

As used herein, the term "substantially completely" as used to describe a phase of the hydrogen fuel refers to at least seventy-five percent by mass of the described portion of the hydrogen fuel being in the stated phase, such as at least eighty-five percent, such as at least ninety percent, such as at least ninety-two and a five tenths percent, such as at least ninety-five percent, such as at least ninety-seven and a five tenths percent, or such as at least ninety-nine percent by mass of the described portion of the hydrogen fuel being in the stated phase.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle. The polymeric matrix material may include, for example, epoxy resin, bismaleimide (BMI) resin, polyimide resin, or thermoplastic resin.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

The term "metallic" as used herein in reference to a material is a material is a metal-based material. Such metals include, but not limited to, titanium, iron, aluminum, stainless steel, and nickel alloys. A metallic material or a metal-alloy can be a combination of at least two or more elements or materials, where at least one is a metal.

Combustible hydrocarbon liquid fuel, such as Jet-A fuel, has long been used in turbine engines for aircraft. The fuel storage aboard the aircraft has been designed for such fuels. A hydrogen fuel (e.g., diatomic hydrogen) may be utilized to eliminate carbon dioxide emissions from commercial aircraft. Hydrogen fuel, however, poses a number of challenges as compared with combustible hydrocarbon liquid fuel. For example, in its gaseous form, hydrogen fuel has a much lower power density than Jet-A fuel. Even when hydrogen fuel is stored in the liquid phase, the liquid hydrogen fuel requires approximately four times the volume of Jet-A fuel to operate the aircraft over a given range. Moreover, hydrogen fuel has a relatively low boiling point and must be stored at cryogenic temperatures to be maintained in the liquid phase. A storage tank holding liquid hydrogen cryogenically requires more space overall and has an increased weight as compared with a storage tank holding a comparable volume of Jet-A fuel. These space and weight requirements can be a particular disadvantage when using hydrogen fuel for applications such as aircraft, where space and weight are at a premium. The present disclosure discusses a hydrogen storage tank that may be used as a fuel tank for storing liquid hydrogen (diatomic hydrogen) onboard an aircraft for use as a fuel to power the aircraft or components thereof.

Composite materials may be used to form the hydrogen storage tank discussed herein, which may be referred to as a composite hydrogen storage tank. The composite hydrogen storage tank is a multi-layer composite hydrogen storage tank that is light weight, has a low hydrogen boiloff, and low hydrogen permeation for storage of liquid hydrogen. Also discussed herein are flexible multi-layer composite pipes for conveying liquid hydrogen.

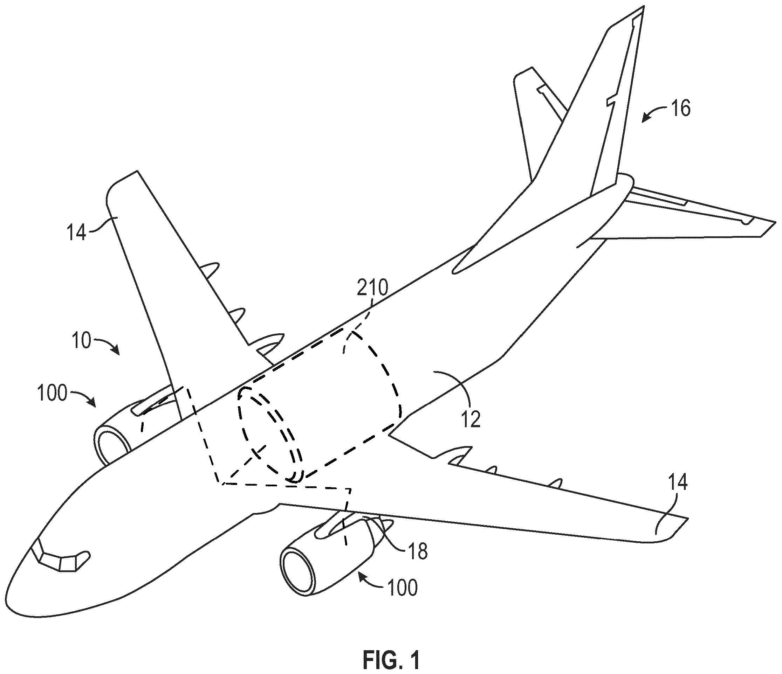

FIG. 1 is a schematic view of an aircraft 10 that may implement the composite hydrogen storage tank and the multi-layer composite pipes discussed herein. The aircraft 10 includes a fuselage 12, a pair of wings 14 attached to the fuselage 12, and an empennage 16. The aircraft 10 also includes a propulsion system that produces a propulsive thrust required to propel the aircraft 10 in flight, during taxiing operations, and the like. The propulsion system for the aircraft 10 shown in FIG. 1 includes a pair of turbine engines 100. As depicted in FIG. 1, each turbine engine 100 is attached to one of the wings 14 by a pylon 18 in an under-wing configuration. Although the turbine engines 100 are shown attached to the wing 14 in an under-wing configuration in FIG. 1, the turbine engine 100 may have alternative configurations and be coupled to other portions of the aircraft 10. For example, the turbine engine 100 may additionally or alternatively include one or more aspects coupled to other parts of the aircraft 10, such as, for example, the empennage 16 and the fuselage 12.

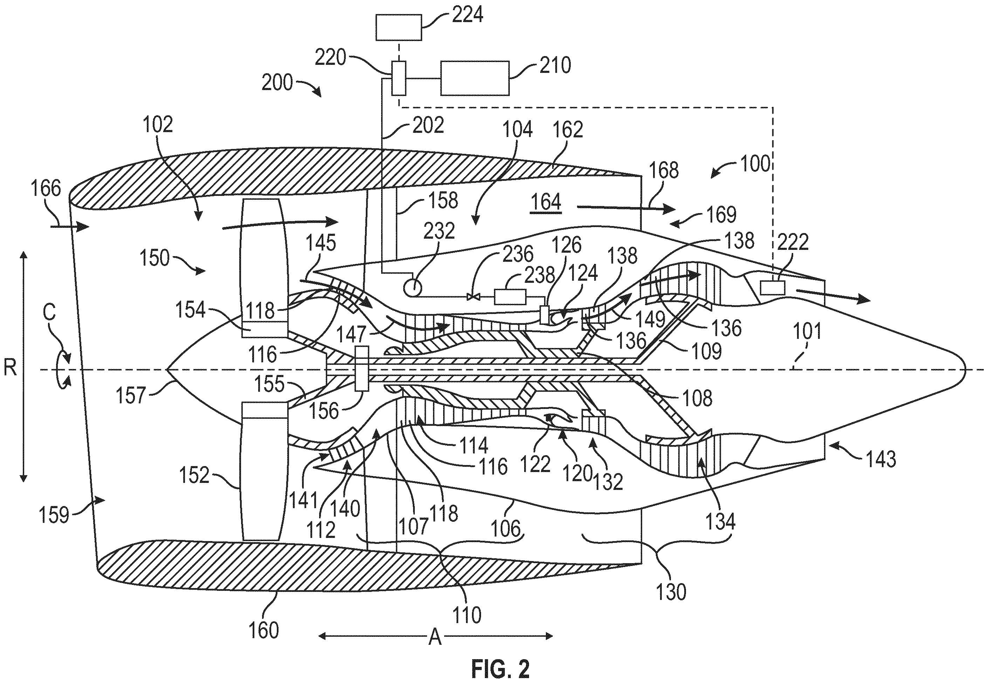

As will be described in more detail below with reference to FIG. 2, the turbine engines 100 shown in FIG. 1 are turbine engines that are each capable of selectively generating a propulsive thrust for the aircraft 10. The amount of propulsive thrust may be controlled at least in part based on a volume of fuel provided to the turbine engines 100 via a fuel system 200 (see FIG. 2). As discussed herein, the fuel is a hydrogen fuel that is stored in a fuel tank 210 of the fuel system 200. At least a portion of the fuel tank 210 is located in the fuselage 12 and, as shown in FIG. 1, entirely within the fuselage 12. The fuel tank 210, however, may be located at other suitable locations in the fuselage 12 or the wing 14, such as with a portion of the fuel tank 210 in the fuselage 12 and a portion of the fuel tank 210 in the wing 14. Alternatively, the fuel tank 210 may also be located entirely within the wing 14. A single fuel tank 210 is depicted in FIG. 1, but a plurality of fuel tanks 210 may be used.

Although the aircraft 10 shown in FIG. 1 is an airplane, the embodiments described herein may also be applicable to other aircraft 10, including, for example, helicopters and unmanned aerial vehicles (UAV). The aircraft discussed herein are fixed-wing aircraft or rotor aircraft that generate lift by aerodynamic forces acting on, for example, a fixed wing (e.g., the wing 14) or a rotary wing (e.g., a rotor of a helicopter), and are heavier-than-air aircraft, as opposed to lighter-than-air aircraft (such as a dirigible). In addition, the embodiments described herein may also be applicable to other applications where hydrogen is used as a fuel. The engines described herein are turbine engines, but the embodiments described herein also may be applicable to other engines. Further, the engine, specifically, the gas turbine engine, is an example of a power generator using hydrogen as a fuel, but hydrogen may be used as a fuel for other power generators, including, for example, fuel cells (hydrogen fuel cells). Such power generators may be used in various applications including stationary power-generation systems (including both turbines and hydrogen fuel cells) and other vehicles beyond the aircraft 10 explicitly described herein, such as boats, ships, cars, trucks, and the like.

FIG. 2 is a schematic, cross-sectional view of one of the turbine engines 100 of the aircraft 10 shown in FIG. 1. The turbine engine 100 has an axial direction A (extending parallel to a longitudinal centerline axis 101, shown for reference in FIG. 2), a radial direction R, and a circumferential direction. The circumferential direction C extends in a direction rotating about the longitudinal centerline axis 101 (the axial direction A). In FIG. 2, the turbine engine 100 depicted is a high bypass turbofan engine, including a fan section 102 and a turbo-engine 104 disposed downstream from the fan section 102.

The turbo-engine 104 depicted in FIG. 2 includes, in serial flow relationship, a compressor section 110, a combustion section 120, and a turbine section 130. The turbo-engine 104 is substantially enclosed within an outer casing 106 (also referred to as a housing or a nacelle) that is substantially tubular and defines a core inlet 141. In this embodiment, the core inlet 141 is annular. As schematically shown in FIG. 2, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 can include a plurality of compressor stages. In each stage, a plurality of compressor blades 116 rotates relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 can be a part of a compressor rotor that includes a disk and each compressor blade 116 of the plurality of compressor blades 116 extends radially from the disk. Other configurations of the compressor rotor can be used, including, for example, blisks where the disk and the compressor blades 116 are integrally formed with each other to be a single piece. The corresponding static compressor vanes 118 are located upstream of and adjacent to the rotating compressor blades 116. The compressor vanes 118 for a stage of the compressor can be mounted to a core casing 107 in a circumferential arrangement. The core casing 107 can define, at least in part, the core air flow path 140. Each compressor stage can be used to sequentially compress the core air 145 flowing through the core air flow path 140, generating compressed air 147. Any suitable number of compressor blades 116, compressor vanes 118, and compressor stages can be used.

Each of the HP turbine 132 and the LP turbine 134 also can include a plurality of turbine stages. In each stage, a plurality of turbine blades 136 rotates relative to a corresponding plurality of static turbine vanes 138 (also called a nozzle) to extract energy from combustion gases 149 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are located upstream of and adjacent to the rotating turbine blades 136. The turbine vanes 138 for a stage of the turbine can be mounted to the core casing 107 in a circumferential arrangement.

In the combustion section 120, fuel, received from the fuel system 200, is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit 236 of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The fuel system 200 is configured to store the hydrogen fuel in the fuel tank 210 and to deliver the hydrogen fuel the turbine engine 100 and, more specifically, the fuel nozzles 126 via a fuel delivery assembly 202. The fuel delivery assembly 202 includes tubes, pipes, conduits, and the like, to fluidly connect the various components of the fuel system 200 to each other. The fuel delivery assembly 202 provides a flow path of the hydrogen fuel from the fuel tank 210 downstream to the turbine engine 100 and, more specifically, the fuel nozzles 126.

The fuel tank 210 may be configured to hold the hydrogen fuel at least partially within the liquid phase and may be configured to provide hydrogen fuel to the fuel delivery assembly 202 substantially completely in the liquid phase, such as completely in the liquid phase. For example, the fuel tank 210 may have a fixed volume and contain a volume of the hydrogen fuel in the liquid phase. As the fuel tank 210 provides hydrogen fuel to the fuel delivery assembly 202 substantially completely in the liquid phase, the volume of the liquid hydrogen fuel in the fuel tank 210 decreases and the remaining volume in the fuel tank 210 is made up by, for example, hydrogen, such as diatomic hydrogen, substantially completely in the gaseous phase (gaseous hydrogen).

To store the fuel including diatomic hydrogen substantially completely in the liquid phase, the fuel including diatomic hydrogen may be stored in the fuel tank 210 at very low (cryogenic) temperatures. For example, the fuel including diatomic hydrogen may be stored in the fuel tank 210 at about negative two hundred fifty-three degrees Celsius or less at atmospheric pressure, or at other temperatures and pressures to maintain the fuel including diatomic hydrogen substantially completely in the liquid phase. As discussed in more detail below, the fuel tank 210 discussed herein is a composite component formed, at least in part, by composite material. Various suitable means may be used with the composite material to minimize heat transfer and to maintain the hydrogen fuel in the liquid phase at the cryogenic temperatures. Additional details of the fuel tank 210 and more specifically the walls thereof, will be discussed further below. As noted above, the liquid hydrogen fuel, including diatomic hydrogen, may be supplied from the fuel tank 210 to the fuel delivery assembly 202, which includes tubes, pipes, conduits, and the like. Composite pipes may be used for the fuel delivery assembly 202, and additional details of suitable composite pipes are discussed further below. The fuel tank 210 may be fluidly connected to the fuel delivery assembly 202 via one or more ports, as will be discussed further below.

The hydrogen fuel is delivered to the engine by the fuel delivery assembly 202 in the gaseous phase, the supercritical phase, or both (at least one of the gaseous phase or the supercritical phase). The fuel system 200 thus includes a vaporizer 220 in fluid communication with the fuel delivery assembly 202 to heat the liquid hydrogen fuel flowing through the fuel delivery assembly 202. The vaporizer 220 is positioned in the flow path of the hydrogen fuel between the fuel tank 210 and the turbine engine 100. The vaporizer 220 may be positioned at least partially within the fuselage 12 (FIG. 1) or the wing 14 (FIG. 1), such as at least partially within the wing 14. The vaporizer 220 may, however, be positioned at other suitable locations in the flow path of the hydrogen between the fuel tank 210 and the turbine engine 100. For example, the vaporizer 220 may be positioned external to the fuselage 12 and the wing 14, and positioned at least partially within the pylon 18 (FIG. 1) or the turbine engine 100. When positioned in the turbine engine 100, the vaporizer may be located in the nacelle 160, for example. Although only one vaporizer 220 is shown in FIG. 2, the fuel system 200 may include multiple vaporizers 220. For example, when a vaporizer 220 is positioned in the turbine engine 100 or in the pylon 18 and functions as a primary vaporizer configured to operate once the turbine engine 100 is in a thermally stable condition, another vaporizer 220 is positioned upstream of the primary vaporizer and proximate to the fuel tank 210 and functions as a primer vaporizer during start-up (or prior to start-up) of the turbine engine 100.

The vaporizer 220 is in thermal communication with at least one heat source. As depicted in FIG. 2, the vaporizer 220 is in thermal communication with a primary heat source 222 and an auxiliary heat source 224. In this embodiment, primary heat source 222 is waste heat from the turbine engine 100. As depicted in FIG. 2, the primary heat source 222 is shown schematically as a heat exchanger positioned in the core air flow path 140 to extract heat from the combustion gases 149. The vaporizer 220 may be thermally connected to other heat sources of the turbine engine 100 including, for example, at least one of a main lubrication system, a compressor cooling air (CCA) system, an active thermal clearance control (ATCC) system, or a generator lubrication system. In such a manner, the vaporizer 220 is configured to operate by drawing heat from the primary heat source 222 once the turbine engine 100 is capable of providing enough heat, via the primary heat source 222, to the vaporizer 220, in order to facilitate operation of the vaporizer 220.

The vaporizer 220 may be heated by any suitable heat source, and, in this embodiment, for example, the auxiliary heat source 224 is a heat source external to the turbine engine 100. The auxiliary heat source 224 may include, for example, an electrical power source, a catalytic heater or burner, and/or a bleed airflow from an auxiliary power unit. The auxiliary heat source 224 may be integral to the vaporizer 220, such as when the vaporizer 220 includes one or more electrical resistance heaters, or the like, that are powered by the electrical power source. In this configuration, the auxiliary heat source 224 may provide heat for the vaporizer 220 independent of whether or not the turbine engine 100 is running and can be used, for example, during start-up (or prior to start-up) of the turbine engine 100.

As noted, the vaporizer 220 is in communication with the flow of the hydrogen fuel through the fuel delivery assembly 202. The vaporizer 220 is configured to draw heat from at least one of the primary heat source 222 and the auxiliary heat source 224 to heat the flow of hydrogen fuel from a substantially completely liquid phase to a substantially completely gaseous phase or to a substantially completely supercritical phase.

The fuel system 200 also includes a high-pressure pump 232 in fluid communication with the fuel delivery assembly 202 to direct the flow of the hydrogen fuel through the fuel delivery assembly 202 to the turbine engine 100. The high-pressure pump 232 may generally be the primary source of pressure rise in the fuel delivery assembly 202 between the fuel tank 210 and the turbine engine 100. The high-pressure pump 232 may be configured to increase a pressure in the fuel delivery assembly 202 to a pressure greater than a pressure within the combustion chamber 124 of the combustor 122 of the turbine engine 100, and to overcome any pressure drop of the components placed downstream of the high-pressure pump 232.

The high-pressure pump 232 is positioned within the flow of hydrogen fuel in the fuel delivery assembly 202 at a location downstream of the vaporizer 220. In this embodiment, the high-pressure pump 232 is positioned external to the fuselage 12 (FIG. 1) and the wing 14 (FIG. 1) and is positioned at least partially within the pylon 18 (FIG. 1), or at least partially within the turbine engine 100. More specifically, the high-pressure pump 232 is positioned within the turbine engine 100. With the high-pressure pump 232 located in such a position, the high-pressure pump 232 may be any suitable pump configured to receive the flow of hydrogen fuel in a substantially completely gaseous phase or a supercritical phase. In other embodiments, however, the high-pressure pump 232 may be positioned at other suitable locations, including other positions within the flow path of the hydrogen fuel. For example, the high-pressure pump 232 may be located upstream of the vaporizer 220 and may be configured to receive the flow of hydrogen fuel through the fuel delivery assembly 202 in a substantially completely liquid phase.

The fuel system 200 also includes a fuel metering unit 236 in fluid communication with the fuel delivery assembly 202. Any suitable fuel metering unit 236 may be used including, for example, a fuel metering valve placed in fluid communication with the fuel delivery assembly 202. The fuel delivery assembly 202 is configured to provide the fuel to the fuel metering unit 236, and the fuel metering unit 236 is configured to receive hydrogen fuel from a fuel source such as the fuel tank 210. The fuel metering unit 236 is further configured to provide the flow of the hydrogen fuel to the combustor 122. The fuel metering unit 236 is configured to provide a desired volume of the hydrogen fuel, at, for example, a desired flow rate, to a fuel manifold 238 of the turbine engine 100. The fuel manifold 238 then distributes (provides) the hydrogen fuel received to the fuel nozzles 126 (a plurality of fuel nozzles). Adjusting the fuel metering unit 236 changes the volume of fuel (and diluent) provided to the combustion chamber 124 of the combustor 122 and, thus, changes the amount of propulsive thrust produced by the turbine engine 100 to propel the aircraft 10.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and the turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, are coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by a fan shaft 155 that is powered by the LP shaft 109 across a power gearbox, also referred to as a gearbox assembly 156. In this way, the fan 150 is drivingly coupled to, and powered by, the turbo-engine 104, and the turbine engine 100 is an indirect drive engine. The gearbox assembly 156 is shown schematically in FIG. 1. The gearbox assembly 156 is a reduction gearbox assembly for adjusting the rotational speed of the fan shaft 155 and, thus, the fan 150 relative to the LP shaft 109 when power is transferred from the LP shaft 109 to the fan shaft 155. The disk 154 is covered by a fan hub 157 aerodynamically contoured to promote an airflow through the plurality of fan blades 152. Further, a nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable turbine engine, such as a turboshaft engine, a turboprop engine, a turbojet engine, an unducted single fan engine, and the like. In such a manner, in other embodiments, the turbine engine may have other suitable configurations, such as other suitable numbers or arrangements of shafts, compressors, turbines, fans, etc. Further, although the turbine engine 100 is shown as an indirect drive, fixed-pitch turbofan engine, in other configurations, the turbine engine 100 may be a direct drive engine, which does not have a power gearbox (e.g., the gearbox assembly 156) and, in which, the LP shaft 109 is directly connected to the fan 150. The fan speed is the same as the LP shaft speed for a direct drive engine. In other configurations, the turbine engine 100 may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

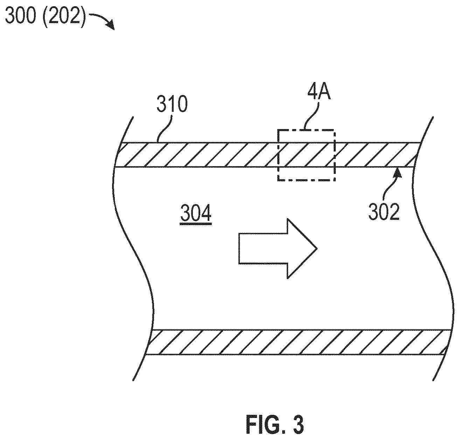

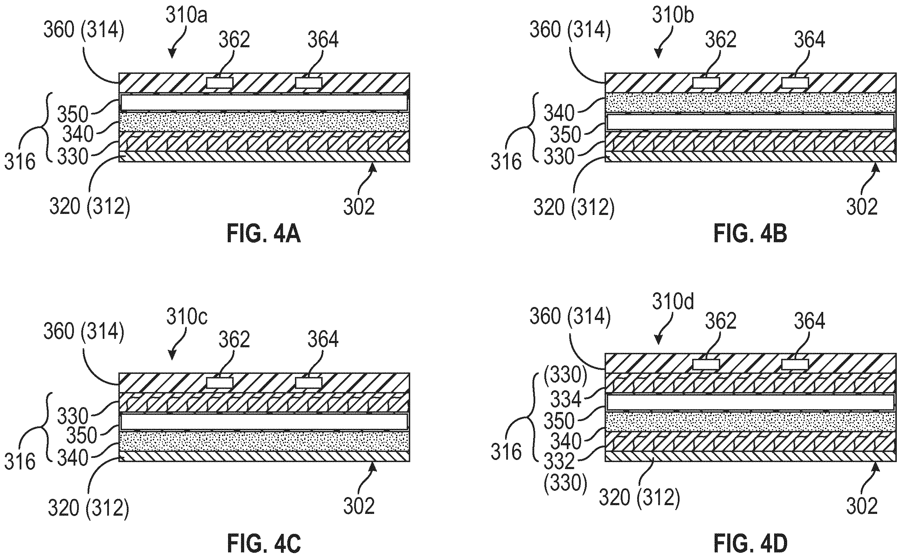

FIG. 3 is a schematic cross-sectional view of a pipe 300 that may be used to convey liquid hydrogen. The pipe 300 may be used as part of the fuel delivery assembly 202 discussed above. The pipe 300 includes a wall (referred to herein as a pipe wall 310) having an inner surface 302. The pipe wall 310 and, more specifically, the inner surface 302 defines a flow passage 304 for the fluid conveyed by the pipe 300 to flow therethrough. When the pipe 300 is part of the fuel delivery assembly 202, the pipe 300 may convey hydrogen fuel. The pipe 300 discussed herein is a light weight, flexible pipe that provides good insulation providing a low boiloff, low permeation solution for conveying liquid hydrogen. The pipe wall 310 discussed herein may be particularly advantageous for pipes having a large diameter (e.g., an inner diameter of about two inches), allowing high flow rates such as greater than ten kilograms per minute or twenty-two pounds per minute of liquid hydrogen. The pipe wall 310 has a multi-layer composite construction that provides these advantages. FIGS. 4A to 4D are detail views of the pipe wall 310 and show various different layer arrangements of the pipe wall 310. The pipe walls 310 shown in FIGS. 4A to 4D are similar and the same reference numerals are used in the following discussion for the same or similar components.

FIG. 4A is a detail view of a first pipe wall 310a that may be used as the pipe wall 310 (FIG. 3) of the pipe 300 (FIG. 3). FIG. 4A shows detail 4A in FIG. 3. The first pipe wall 310a includes an inner layer 312, an outer layer 314, and a plurality of insulating layers 316 between the inner layer 312 and the outer layer 314. The inner layer 312 includes the inner surface 302 and defines the flow passage 304, and the outer layer 314 is an exterior layer of the first pipe wall 310a.

The inner layer 312 is a hydrogen barrier layer 320. The hydrogen barrier layer 320 is a layer of material that protects the composite material from direct contact with hydrogen and may act as a diffusion barrier for the hydrogen. Materials suitable for use as the hydrogen barrier layer 320 may include metallic materials, such as metals and metal alloys, including aluminum, aluminum alloys, and steel alloys. The hydrogen barrier layer 320 may thus be a metallic layer. Non-metal materials, such as polymeric materials (e.g., polyamide, polyethylene) can be used as barrier materials due to their low hydrogen permeability. The hydrogen barrier layer 320 can be a metallic foil. The hydrogen barrier layer 320 can be formed as the layer adjacent to the inner most insulating layer 316 by other means, such as by coating methods, including metal deposition methods, like chemical vapor deposition, for example.

Each of the insulating layers 316 of the first pipe wall 310a will be described in turn, starting from the innermost insulating layers 316 and moving outward to the outer layer 314. The innermost insulating layer 316, as depicted in FIG. 4A, is a woven fiber layer 330. The woven fiber layer 330 comprises a plurality of fiber tows that are woven or otherwise braded together. The fiber tows of the woven fiber layer 330 are preferably formed of light weight fibers. Suitable fibers include, for example, polyimide fibers, such as Kapton^{®} fibers available from DuPont of Wilmington, Delaware, USA; ultra-high-molecular-weight polyethylene (UHMWPE) fibers, such as Dyneema^{®} fibers produced by Avient Corporation of Avon Lake, Ohio, USA; or poly(p-phenylene-2,6-benzobisoxazole) fibers, such as Zylon^{®} produced by Toyobo Co. of Kita-ku, Osaka, Japan. The fibers of the fiber tows in the woven fiber layer 330 may also be hollow fiber tows including, for example, hollow polyacrylonitrile-based (PAN-based) carbon fibers.

The next insulating layer 316 depicted in FIG. 4A is a low-conductivity layer 340. The low-conductivity layer 340 is used to minimize hydrogen boil off from the liquid hydrogen flowing through the flow passage 304 (FIG. 3). The low-conductivity layer 340 may be a foam or a gel, for example. Suitable foams include, for example, glass or polyurethane. The low-conductivity layer 340 can also be a low-conductivity fabric, comprising a plurality of fiber tows. The low-conductivity layer 340 may also include, for example, aerogel, nano particle reinforced films, aluminum or other metallic foils, or elastic polymers. Such metallic foils can be in a particle form of a platelet form to improve mechanical capability of the insulation layer with a minimal increase thermal conductivity. The low-conductivity layer 340 can be a porous layer, such as when the low-conductivity layer 340 is a foam, for example. Greater levels of porosity reduce the thermal conductivity and the porosity can be determined to provide effective insulation. Some structural capacity (e.g., a load bearing capability) can be desired, and increasing the porosity decreases the load bearing capability. The porous layer can have from thirty volume percent porosity to ninety-five volume percent porosity, such as from forty volume percent porosity to ninety-five volume percent porosity, from thirty volume percent porosity to ninety volume percent porosity, or forty volume percent porosity to ninety volume percent porosity of the entire low-conductivity layer 340. The thermal conductivity of the low-conductivity layer 340 can be less than 1.0 W/m·K, such as less than 0.75 W/m·K, or less than 0.5 W/m·K. For example, when the low-conductivity layer 340 is a woven fabric, the conductivity can be from 0.1 W/m·K to 0.5 W/m K. The thermal conductivity of the low-conductivity layer 340 can be less than 0.1 W/m K, such as less than 0.05 W/m K, when other low conductivity layers, like foam and aerogel are used. With such low-conductivity layers 340, the thermal conductivity can be from 0.01 W/m·K to 0.05 W/m·K.

The insulation provided by the insulating layers 316 made of porous materials or low-conductivity fabrics (e.g., the low-conductivity layer 340 when formed from a porous material like foam) can be enhanced by a soft vacuum with a typical pressure of 0.2 to 0.5 psi. The micropores restrict air molecule collision that leads to heat transfer. The soft vacuum can significantly reduce convection, but is easier to maintain than the high vacuum (that can be two orders of magnitude lower, e.g., 0.002 psi) typically used in vacuum jacketed stainless steel pipes.

As depicted in FIG. 4A, the outermost insulating layer 316 is a jacketed vacuum layer 350. The vacuum layer 350 includes a void space. Although the layers adjacent to the vacuum layer 350 can be used to define the void space, the vacuum layer may also include a jacket that encompasses and defines, at least in part, the void space. The jacket may be formed by a woven fabric or an elastomeric polymer, for example, rubber. Drawing the vacuum in the void space helps decrease the thermal conductivity and increase the insulating capability of the first pipe wall 310a.

The outer layer 314 is a heavy-duty cover 360 to provide strength, flexibility, and durability and to prevent deterioration under environmental attack. The cover 360 may be formed of various materials including reinforcing fiber tows. Such reinforcing fiber tows may be woven or braided to provide flexibility. The reinforcing fiber tows can be carbon fiber tows, for example. Additionally, the cover 360 may be a composite including a matrix material around the reinforcing fiber tows. The cover 360 may thus be a PMC and the matrix materials and the reinforcing fiber tows may be those discussed in more detail above.

The insulating layers 316 are not limited to the specific arrangement depicted in FIG. 4A and other numbers of the insulating layers 316 or arrangements (e.g., ordering) of the insulating layers 316 may be used. FIGS. 4B to 4D are detail cross-sectional views similar to FIG. 4A showing alternative layer arrangements of the pipe wall 310. Additionally, although each of the layers described in FIG. 4A are shown in FIGS. 4B to 4D, these layers are not required in every instance and some layers, such as the vacuum layer 350, can be omitted.

FIG. 4B shows a second pipe wall 310b having an alternative arrangement of layers. As depicted in FIG. 4B, the low-conductivity layer 340 is the outermost insulating layer 316 and the vacuum layer 350 is positioned between the woven fiber layer 330 and the low-conductivity layer 340.

FIG. 4C shows a third pipe wall 310c having another alternative arrangement of layers. As depicted in FIG. 4C, the vacuum layer 350 is positioned between the woven fiber layer 330 and the low-conductivity layer 340 (as in FIG. 4C), but the woven fiber layer 330 is the outermost insulating layer 316.

FIG. 4D shows a fourth pipe wall 310d having a further alternative arrangement of layers. The fourth pipe wall 310d depicted in FIG. 4D includes a plurality of woven fiber layers 330 including a first woven fiber layer 332 and a second woven fiber layer 334. The first woven fiber layer 332 and the second woven fiber layer 334 can be separated, such as by one or more additional insulating layers 316. In FIG. 4D, the first woven fiber layer 332 is the innermost insulating layer 316 and the second woven fiber layer 334 is the outermost insulating layer 316. One or more additional insulating layers 316 can be located between the first woven fiber layer 332 and the second woven fiber layer 334, such as a plurality of additional insulating layers. For example, the low-conductivity layer 340, the vacuum layer 350, or both can be located between the first woven fiber layer 332 and the second woven fiber layer 334.

Using layers having woven or braided fiber tows, such as the cover 360, enables the positioning of health monitoring sensors 362 in these layers during the weaving or braiding process. These health monitoring sensors 362 may then be coupled to a controller or other output to monitor for leaks in the pipe 300. The health monitoring sensors 362 may be hydrogen detection sensors. The health monitoring sensors 362 may be hydrogen detection sensors such as, for example, Micro-Electro-Mechanical Systems (MEMS) sensors implementing a suitable technology for determining the presence of hydrogen such as sensors using catalysts that react in the presence of hydrogen, or resistive sensors, such as those that include semiconductor materials that have a resistance change when exposed to hydrogen. When the health monitoring sensors 362 detects a leak, the health monitoring sensors 362 send an output, for example, to the controller to indicate that a leak has been detected.

The composite materials discussed herein, when subjected to hydrogen and the cryogenic temperatures, may be susceptible to microcracking or other damage. When the cover 360 is a composite material, repair agents in the form of capsules 364 may be mixed in the composite matrix material. When these capsules 364 are exposed to hydrogen, for example, they release the repair agents to repair the matrix material. When the matrix material is an epoxy, the repair agent can be Poly(methyl methacrylate), for example.

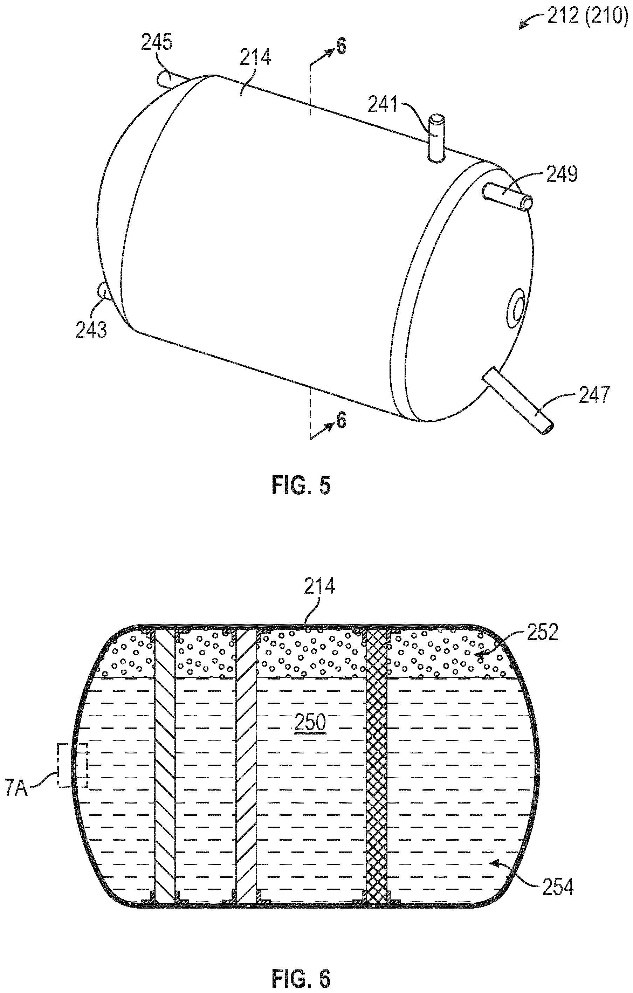

FIG. 5 is schematic view of the fuel tank 210. As discussed above, the fuel tank 210 may be a composite tank for storing liquid hydrogen, which is referred to herein as a composite hydrogen storage tank 212. The composite hydrogen storage tank 212 shown in FIG. 5 (and also the fuel tank 210 shown in FIG. 1) is depicted as a circular, cylindrical tank, but other geometries may be used. In particular, the composite materials used to form the composite hydrogen storage tank 212 may allow for irregularly shaped fuel tanks 210 to be formed. Such irregular shaped fuel tanks 210 may be particularly advantageous for vehicles, such as cars, trucks, and the aircraft 10 depicted in FIG. 1, where space is at a premium and forming irregular shapes may allow for additional positioning of the fuel tank 210, such as in the wings 14 (FIG. 1) for example. The composite hydrogen storage tank 212 can have a longitudinal direction, a circumferential direction (which can be a perimetric direction for non-cylindrical tanks) about a longitudinal axis that is parallel to the longitudinal direction, and a radial direction (which can be an inward and outward direction for non-cylindrical tanks) that is perpendicular to the longitudinal axis.

The composite hydrogen storage tank 212 includes at least one vessel wall 214 formed from the composite materials discussed herein. More specifically, the vessel wall 214 can be formed from a plurality of reinforcing fiber tows embedded in a matrix, such as PMC materials discussed in more detail above. Additional details of the vessel wall 214 will be discussed further below.

FIG. 6 is a cross section of the composite hydrogen storage tank 212 taken along line 6-6 in FIG. 5. An inner vessel wall, such as the vessel wall 214, defines a chamber 250 in which the hydrogen fuel in the liquid phase (liquid hydrogen) is stored. The chamber 250 includes an upper portion 252 and a lower portion 254. The gaseous hydrogen will collect in the upper portion 252 of the chamber 250 and the liquid hydrogen will be located in the lower portion 254 of the chamber 250. As the fuel tank 210 provides hydrogen fuel, the volume of the liquid hydrogen fuel in the fuel tank 210 decreases, with the remaining volume in the fuel tank made up of gaseous hydrogen.

Referring back to FIG. 5, the composite hydrogen storage tank 212 depicted in FIG. 3 includes a plurality of fluid ports. Each of these fluid ports fluidly connects the chamber 250 to outside of the fuel tank 210 and penetrates vessel wall 214. Each of the fluid ports may connect to a fluid line, such as a pipe, tube, conduit, etc., suitable for the application to convey the fluid to or from the fuel tank 210 and, more specifically, the chamber 250 of the fuel tank 210. One fluid port is a gaseous hydrogen extraction port 241. As noted above, gaseous hydrogen may collect in the upper portion 252 of the chamber 250. The gaseous hydrogen extraction port 241 is fluidly connected to the upper portion 252 of the chamber 250 and may extend radially outward from the fuel tank 210. The gaseous hydrogen extraction port 241 may be used to remove (extract) the gaseous hydrogen from the chamber 250, such as by venting the chamber 250 to the atmosphere. The gaseous hydrogen extraction port 241 may be used to regulate the pressure in the chamber 250. A suitable control valve, such as a pressure control valve, may be located in the gaseous hydrogen extraction line to regulate the pressure and to control venting the chamber 250.

The fuel tank 210 is filled using at least one liquid hydrogen fill port. In this embodiment, the fuel tank 210 includes two liquid hydrogen fill ports, a lower liquid hydrogen fill port 243 and an upper liquid hydrogen fill port 245. Each of the lower liquid hydrogen fill port 243 and the upper liquid hydrogen fill port 245 is connected to a liquid hydrogen fill line (not shown) that may extend from the chamber 250 (FIG. 6) to a coupling located on the exterior of the aircraft 10 (FIG. 1), such as on the exterior of the fuselage 12 (FIG. 1). The lower liquid hydrogen fill port 243 and the upper liquid hydrogen fill port 245 may be connected to separate hydrogen fill lines or to a common hydrogen file line. A valve may be incorporated into the coupling or placed between the coupling and the chamber 250. A liquid hydrogen source is coupled to the coupling and the valve opened to fill the fuel tank 210 with liquid hydrogen. The lower liquid hydrogen fill port 243 is fluidly connected to the chamber 250 at the lower portion 254 and may be used to fill the fuel tank 210 from the bottom (bottom fill). The upper liquid hydrogen fill port 245 is fluidly connected to the chamber 250 at the upper portion 252 and may be used to fill the fuel tank 210 from the top (top fill). In some embodiments, one of the lower liquid hydrogen fill port 243 and the upper liquid hydrogen fill port 245 may be used to fill the fuel tank 210. In other embodiments, both the lower liquid hydrogen fill port 243 and the upper liquid hydrogen fill port 245 may be used simultaneously to fill the fuel tank 210 with a favorable hydrogen quality, such as desired temperatures, pressures and degrees of saturation for the hydrogen in the fuel tank 210.

A fuel extraction port 247 is fluidly coupled to the chamber 250 and the fuel delivery assembly 202 to provide hydrogen fuel to the fuel delivery assembly 202. The fuel tank 210, more specifically, the chamber 250, is fluidly coupled to the fuel delivery assembly 202 by the fuel extraction port 247. As the fuel tank 210 provides hydrogen fuel, the volume of the liquid hydrogen fuel in the fuel tank 210 decreases, and the fuel extraction port 247 is fluidly coupled to the chamber 250 at the lower portion 254 (FIG. 6) of the chamber 250. Gaseous hydrogen may be separated from the liquid hydrogen fuel and the gaseous hydrogen may recirculated back to the fuel tank 210, and, more specifically, the chamber 250, by a hydrogen vapor return line fluidly connected to a hydrogen vapor return port 249. The hydrogen vapor return port 249 may be fluidly connected to the chamber 250 at the upper portion 252 (FIG. 6) of the chamber 250 to return the gaseous hydrogen to the vapor space within the chamber 250.

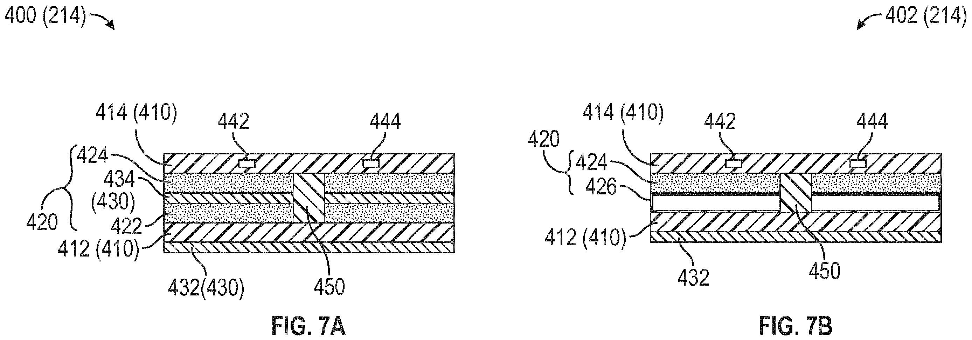

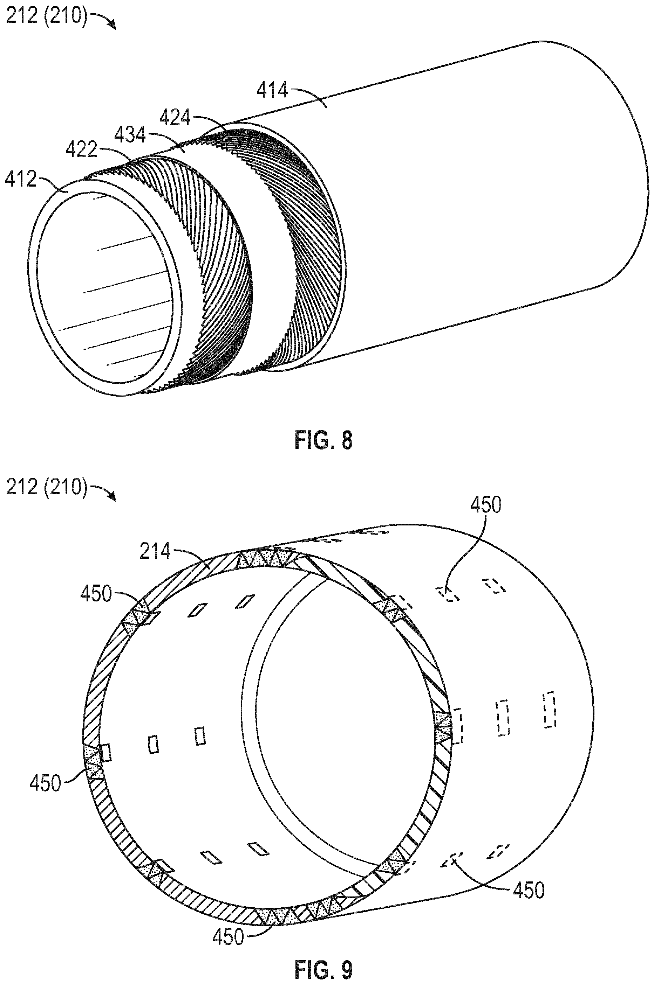

FIG. 7A is a cross-sectional detail view of the vessel wall 214 of the composite hydrogen storage tank 212 shown in FIG. 6. FIG. 7A shows detail 7A of FIG. 6. The vessel wall 214 depicted in FIG. 7A provides good insulation, providing a low boiloff, low permeation solution for storing liquid hydrogen. The vessel wall 214 has a multi-layer composite construction (referred to herein as a multi-layer vessel wall 400) that provides these advantages. FIG. 7A shows the multi-layer construction of the multi-layer vessel wall 400, and FIG. 8 is a partial cross-sectional view of the composite hydrogen storage tank 212 also illustrating these layers.

The multi-layer vessel wall 400 includes a plurality of composite layers 410. The plurality of composite layers 410 includes an inner composite layer 412 and an outer composite layer 414. The multi-layer vessel wall 400 can be formed of two composite layers 410 (as shown in FIG. 7A) or, alternatively, be formed by more than two composite layers 410. The composite layers 410 may be any of the composite discussed above including PMCs. The composite layers 410 include a plurality of reinforcing fiber tows surrounded by a matrix material. The composite layers 410 provide the structure and load support for the composite hydrogen storage tank 212 (FIG. 5).

The multi-layer vessel wall 400 also includes a plurality of insulating layers 420 between the inner composite layer 412 and the outer composite layer 414. The insulating layers 420 depicted in FIG. 7A include a plurality of low-conductivity layers including an inner low-conductivity layer 422 and an outer low-conductivity layer 424. Each of the inner low-conductivity layer 422 and the outer low-conductivity layer 424 may be similar to the low-conductivity layer 340 (FIGS. 4A to 4D) discussed above with respect to the pipe wall 310 (FIG. 3) and the discussion of the low-conductivity layer 340 applies here.

The inner composite layer 412 includes a surface that faces or defines the chamber 250 (FIG. 6) of the composite hydrogen storage tank 212. Accordingly, these surfaces may be exposed to liquid hydrogen. The composite materials discussed herein, particularly, the PMC materials including those using carbon fibers in the reinforcing fiber tows of the PMC may be susceptible to damage by exposure to the liquid hydrogen. The carbon fiber and the matrix material may become embrittled because of the cryogenic temperatures. In addition, hydrogen may diffuse or otherwise seep through the composite material, such as from microcracking, for example, if the composite material is used alone as the inner vessel wall (e.g., vessel wall 214 (FIG. 5)). The multi-layer vessel wall 400 thus includes one or more hydrogen barrier layers 430. The inner composite layer 412 depicted in FIG. 7A and FIG. 8 shows an inner hydrogen barrier layer 432 and an intermediate hydrogen barrier layer 434.

The inner composite layer 412 may include the inner hydrogen barrier layer 432 formed thereon. The inner hydrogen barrier layer 432 is a layer of material that protects the composite material multi-layer vessel wall 400 from direct contact with hydrogen and may act as a diffusion barrier for the hydrogen. Materials suitable for use as the inner hydrogen barrier layer 432 may include metallic materials, such as metals and metal alloys, including aluminum and aluminum alloys. The hydrogen barrier layer 330 may thus be a metallic layer. The inner hydrogen barrier layer 432 may be a liner that is integrally formed with inner composite layer 412, such as when the reinforcing fibers of the inner composite layer 412 are laid on, for example a lay-up tool like a mandrel. However, the inner hydrogen barrier layer 432 may be formed on the inner composite layer 412 in other ways, such as by spray coating. The hydrogen barrier layers, such as the inner hydrogen barrier layer 432, can be used to prevent the movement of hydrogen and not necessarily to provide structural support. Accordingly, these layers can be relatively thin such as from five mils to fifty mils. Such thicknesses also help to minimize weight.

To further mitigate the opportunities for hydrogen to escape the composite hydrogen storage tank 212, the multi-layer vessel wall 400 may also include the intermediate hydrogen barrier layer 434 positioned between the inner composite layer 412 and the outer composite layer 414. As depicted in FIG. 7A and FIG. 8, the intermediate hydrogen barrier layer 434 is positioned between insulating layers 420, such as the inner low-conductivity layer 422 and the outer low-conductivity layer 424.

As noted above, the weaving and fiber lay-up processes used to lay-up the reinforcing fiber tows of the composite layers 410 afford the opportunity to embed various features within the composite layers 410. The composite hydrogen storage tank 212 thus also includes health monitoring sensors 442 and capsules 444, similar to the health monitoring sensors 362 and the capsules 364, respectively, and the discussion above applies here. As depicted in FIG. 7A, for example, the health monitoring sensors 442 and the capsules 444 can be located in the outer composite layer 414.

The insulating layers 420 may not provide much structure and in some cases, particularly, when gels or foams are used, the insulating layers 420 are compressible. To maintain a gap between the inner composite layer 412 and the outer composite layer 414, a plurality of connectors 450 may be positioned between the inner composite layer 412 and the outer composite layer 414. The connectors 450 may also be composite materials, such as the PMC materials discussed above for the composite layers 410. The connectors 450 can be integrally formed with the composite layers 410 to form a monolithic structure. The connectors 450 resist forces applied to either of the composite layers 410 in an inward or outward direction (e.g., a radial direction) to withstand the force applied to composite layer 410 and maintain the gap between the inner composite layer 412 and the outer composite layer 414.

FIG. 9 is another cross-sectional view of the composite hydrogen storage tank 212, illustrating the positioning of the connectors 450. As depicted in FIG. 9, the connectors 450 can be spaced apart from each other in the perimetric direction, such as the circumferential direction, around the vessel wall 214. The connectors 450 can also be spaced apart from each other in the longitudinal direction of the composite hydrogen storage tank 212. The connectors 450 can be arrayed in the longitudinal direction, such as in a linear array. The connectors 450 can be arranged in a plurality of linear arrays with each linear array spaced apart from each other in the perimetric direction, such as the circumferential direction.

The insulating layers insulating layers 420 of the multi-layer vessel wall 400 are not limited to the specific arrangement depicted in FIG. 7A and other numbers of the insulating layers 420 or arrangements (e.g., ordering) of the insulating layers 420 may be used. FIG. 7B is a cross-sectional detail view similar to FIG. 7A showing an alternative layer arrangement of the vessel wall 214. FIG. 7B shows another multi-layer vessel wall 402 pipe wall 310b having an alternative arrangement of layers. As depicted in FIG. 7B, the inner low-conductivity layer 422 (FIG. 7A) is replaced with a vacuum layer 426. The vacuum layer 426 is similar to the vacuum layer 350 of the pipe wall 310 and that discussion applies here. As the vacuum layer 426 of the multi-layer vessel wall 402 used in the composite hydrogen storage tank 212 does not need to be flexible, the jacket of the vacuum layer 426 may be made from other materials, such as composite materials, that are not flexible.

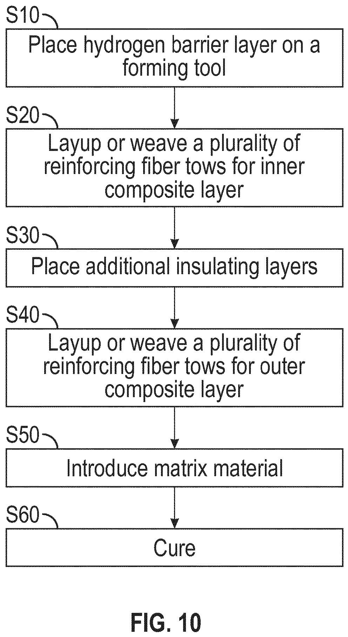

FIG. 10 shows a flow chart of a process for manufacturing the composite hydrogen storage tank 212. When the inner hydrogen barrier layer 432 is applied as an insert, foil, or other solid placement technique, the inner hydrogen barrier layer 432 is placed on a forming tool, such as a mandrel, in step S10. Alternatively, when the inner hydrogen barrier layer 432 is applied by other means, such as spraying or chemical vapor deposition, the inner hydrogen barrier layer 432 may be applied after curing (step S60) discussed further below.

The method includes laying up a plurality of reinforcing fiber tows on the inner hydrogen barrier layer 432 or the mandrel in step S20 that will be used for forming a preform for the inner composite layer 412. Various methods may be used to form the preform for inner composite layer 412. For example, the methods may include winding the plurality of reinforcing fiber tows around the inner hydrogen barrier layer 432 or mandrel. The reinforcing fiber tows may be moved axially as the mandrel is rotated to form a plurality of plies. Each of the plies includes a plurality of fiber tows. The plurality of plies may be laid up by hand (i.e., hand lay-up) or using an automated process including an automated lay-up system. The automated lay-up system and corresponding automated process may be, for example, an Automated Tape Laying (ATL) system, an Automated Fiber Placement (AFP) system, a Thermoplastic Fiber/Tape Placement (TTP) system, Pick-and-Place system, and the like. Other methods may be used, including, weaving two-dimensional woven fabrics, weaving three-dimensional woven fabrics, or braiding.

In step S30, the insulating layers 420 are placed over top of the inner composite layer 412 by suitable means for each of the different insulating layers 420. The connectors 450 may be placed before the insulating layers 420 and the material of the insulating layers 420 is placed around the connectors 450. When one or more intermediate hydrogen barrier layers 434 are used, the intermediate hydrogen barrier layers 434 may also be applied with the insulating layers 420.

The method includes laying up a plurality of reinforcing fiber tows over the insulating layers 420 in step S40 that will be used to form a preform for the outer composite layer 414. The preform for the outer composite layer 414 may be formed in a manner similar to the preform for the inner composite layer 412, as discussed above in step S20. The health monitoring sensors 442 and capsules 444 may be placed as part of laying up the plurality of reinforcing fiber tows.

The method includes introducing a matrix material in step S50. After the preform is complete (i.e., the final preform), a matrix material may be injected into the preform, in step S50, to generate an infiltrated (or an impregnated) preform. When the composite component is a polymer matrix composite, polymers and/or resin may be pumped into, injected into, or otherwise provided to a mold or a cavity to infiltrate or to impregnate the dry fibers in this step. Other infiltration processes may be used in this step depending upon the matrix material. As noted above, the plies may be formed using prepreg fiber tows, and, in such an embodiment, introducing and providing the matrix material occurs when the prepreg fiber tows are laid up. The capsules 444 may be introduced with the matrix.

The method continues with curing the infiltrated preform, in step S60, to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S60 may be done in conjunction with step S30, such as when the matrix material is injected into the final preform in a molten state and the curing step includes cooling the matrix material.

Further, the composite component may be finish machined as needed. Finish machining may define the final finished shape or contour of the composite component. Additionally, the composite component can be coated with one or more suitable coatings, such as, e.g., an environmental barrier coating (EBC) or a polyurethane surface coating.

The pipe wall 310 may be formed in a manner similar to the multi-layer vessel wall 400 discussed above. When the layers of the pipe wall 310 are not composites, steps S50 and S60 may be omitted.

The multi-layer walls of the pipe 300 or the composite hydrogen storage tank 212 discussed herein are light weight, have a low hydrogen boiloff, and a low hydrogen permeation for storage or conveyance of liquid hydrogen. Further aspects of the present disclosure are provided by the subject matter of the following clauses.

A flexible pipe for conveying liquid hydrogen includes a multilayer wall defining a flow passage for the liquid hydrogen. The multilayer wall includes an inner layer defining the flow passage, an outer layer forming an exterior of the flexible pipe, and a plurality of insulating layers between the inner layer and the outer layer. The inner layer is a hydrogen barrier layer and the outer layer comprising a plurality of reinforcing fiber tows.

The flexible pipe of the preceding clause, wherein the hydrogen barrier is a layer metal layer.

The flexible pipe of any preceding clause, wherein the hydrogen barrier layer is a metallic foil.

The flexible pipe of any preceding clause, wherein one of the plurality of insulating layers is a vacuum layer.

The flexible pipe of any preceding clause, wherein one of the plurality of insulating layers is a layer of aerogel.

The flexible pipe of any preceding clause, wherein the outer layer is a composite further comprising a matrix surrounding the plurality of reinforcing fiber tows.

The flexible pipe of any preceding clause, wherein the outer layer includes a hydrogen sensor to detect hydrogen leaking from the flow passage.

The flexible pipe of any preceding clause, wherein one of the plurality of insulating layers is a woven fiber layer comprising a plurality of fiber tows.

The flexible pipe of any preceding clause, wherein the plurality of fiber tows in the woven fiber layer includes hollow fiber tows.

The flexible pipe of any preceding clause, wherein fibers of the plurality of fiber tows in the woven fiber layer include polyimide fibers, ultra-high-molecular-weight polyethylene fibers, or poly(p-phenylene-2,6-benzobisoxazole) fibers.

The flexible pipe of any preceding clause, wherein the plurality of insulating layers includes a plurality of woven fiber layers including a first woven fiber layer and a second woven fiber layer, separated by one or more insulating layers of the plurality of insulating layers.

The flexible pipe of any preceding clause, wherein the first woven fiber layer is the innermost insulating layer and the second woven fiber layer is the outermost insulating layer.

The flexible pipe of any preceding clause, wherein a low-conductivity layer, a vacuum layer, or both are located between the first woven fiber layer and the second woven fiber layer.

The flexible pipe of any preceding clause, wherein one of the plurality of insulating layers is a low-conductivity layer.

The flexible pipe of any preceding clause, wherein the low-conductivity layer is a foam.

The flexible pipe of any preceding clause, wherein the low-conductivity layer is a low-conductivity fabric, comprising a plurality of fiber tows.

The flexible pipe of any preceding clause, wherein the low-conductivity layer is a low-conductivity fabric comprising a plurality of fiber tows or a porous material, the low-conductivity layer having a soft vacuum with a pressure from 0.2 psi to 0.5 psi.

The flexible pipe of any preceding clause, wherein the plurality of insulating layers includes a woven fiber layer comprising a plurality of fiber tows, a low-conductivity layer, and a vacuum layer.

The flexible pipe of any preceding clause, wherein the woven fiber layer is the innermost insulating layer.

The flexible pipe of any preceding clause, wherein the low-conductivity layer is located between the woven fiber layer and the vacuum layer.

The flexible pipe of any preceding clause, wherein the vacuum layer is located between the woven fiber layer and the low-conductivity layer.

The flexible pipe of any preceding clause, wherein one of the plurality of insulating layers comprises metallic foil.

An aircraft comprising a hydrogen storage tank and a power generator fluidly coupled to the hydrogen storage tank to receive hydrogen fuel from the hydrogen storage tank, wherein the power generator is fluidly coupled to the hydrogen storage tank by a fuel delivery assembly including the flexible pipe of any preceding clause.

A composite hydrogen storage tank for storing liquid hydrogen incudes a multilayer composite wall defining a chamber for the liquid hydrogen. The multilayer wall includes an inner composite layer, a hydrogen barrier layer formed on an inner surface of the inner composite layer, an outer composite layer forming an exterior of the composite hydrogen storage tank, and a plurality of insulating layers between the inner composite layer and the outer composite layer. Each of the inner composite layer and the outer composite layer includes a plurality of reinforcing fiber tows surrounded by a matrix. The inner surface of the inner composite layer defines the chamber.

The composite hydrogen storage tank of the preceding clause, wherein the hydrogen barrier layer is a metal layer.

The composite hydrogen storage tank of any preceding clause, wherein the outer composite layer includes a hydrogen sensor to detect hydrogen leaking from the chamber.

The composite hydrogen storage tank of any preceding clause, wherein one of the plurality of insulating layers is a vacuum layer.

The composite hydrogen storage tank of any preceding clause, wherein the hydrogen barrier layer is an inner hydrogen barrier layer, and the composite hydrogen storage tank further comprises an intermediate hydrogen barrier layer positioned between the inner composite layer and the outer composite layer.

The composite hydrogen storage tank of any preceding clause, wherein the plurality of insulating layers includes a plurality of low-conductivity layers including an inner low-conductivity layer and an outer low-conductivity layer.

The composite hydrogen storage tank of any preceding clause, wherein the hydrogen barrier layer is an inner hydrogen barrier layer, and the composite hydrogen storage tank further comprises an intermediate hydrogen barrier layer positioned between the inner low-conductivity layer and the outer low-conductivity layer.

The composite hydrogen storage tank of any preceding clause, wherein one of the plurality of insulating layers is a low-conductivity layer.

The composite hydrogen storage tank of any preceding clause, wherein the low-conductivity layer is a foam.

The composite hydrogen storage tank of any preceding clause, wherein the low-conductivity layer is a low-conductivity fabric, comprising a plurality of fiber tows.

The composite hydrogen storage tank of any preceding clause, wherein the low-conductivity layer is a low-conductivity fabric comprising a plurality of fiber tows or a porous material, the low-conductivity layer having a soft vacuum with a pressure from 0.2 psi to 0.5 psi.

The composite hydrogen storage tank of any preceding clause, wherein another one of the plurality of insulating layers is a vacuum layer.

The composite hydrogen storage tank of any preceding clause, wherein the vacuum layer is located inward of the low-conductivity layer.

The composite hydrogen storage tank of any preceding clause, further comprising a plurality of connectors positioned between the inner composite layer and the outer composite layer.

The composite hydrogen storage tank of any preceding clause, wherein the plurality of connectors are composite connecters including a plurality of reinforcing fiber tows surrounded by a matrix.

The composite hydrogen storage tank of any preceding clause, wherein the composite hydrogen storage tank has a perimetric direction, the plurality of connectors being spaced apart from each other in the perimetric direction.

The composite hydrogen storage tank of any preceding clause, wherein the composite hydrogen storage tank has a longitudinal direction, the plurality of connectors being spaced apart from each other in the longitudinal direction.

The composite hydrogen storage tank of any preceding clause, wherein the composite hydrogen storage tank has a longitudinal direction and a perimetric direction, the plurality of connectors being arrayed in a plurality of linear arrays, each linear array extending in the longitudinal direction and the plurality of connectors within each linear array being spaced apart from each other, each linear array of the plurality of linear arrays being spaced apart from each other in the perimetric direction.

The composite hydrogen storage tank of any preceding clause, wherein each connector of the plurality of connectors is composite connecters including a plurality of reinforcing fiber tows surrounded by a matrix.

The composite hydrogen storage tank of any preceding clause, wherein the plurality of connectors is integrally formed with the inner composite layer and the outer composite layer.

The composite hydrogen storage tank of any preceding clause, wherein each of the inner hydrogen barrier layer and the intermediate hydrogen barrier layer is a metal layer.

An aircraft comprising the composite hydrogen storage tank of any preceding clause and a power generator fluidly coupled to the hydrogen storage tank to receive hydrogen fuel from the composite hydrogen storage tank.

The aircraft of the preceding clause, wherein the power generator is fluidly coupled to composite hydrogen storage tank by a fuel delivery assembly including the flexible pipe of any preceding clause.

The aircraft of any preceding clause, wherein the power generator is a gas turbine engine having a combustor, the combustor including a combustion chamber and a fuel nozzle fluidly coupled to the composite hydrogen storage tank to receive the hydrogen fuel from the composite hydrogen storage tank and inject the hydrogen fuel into the combustor.

The aircraft of any preceding clause, wherein the aircraft further comprises a vaporizer positioned in a hydrogen flow path between the composite hydrogen storage tank and the fuel nozzle, wherein, when the hydrogen fuel is provided to the fuel nozzle, the hydrogen fuel is stored in the liquid phase in the composite hydrogen storage tank and received by the vaporizer substantially completely in the liquid phase, the vaporizer heats the hydrogen fuel to at least substantially completely the gaseous phase and provides the hydrogen fuel in the at least substantially completely the gaseous phase to the fuel nozzle.

Although the foregoing description is directed to the preferred embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A composite hydrogen storage tank (212) for storing liquid hydrogen, the composite hydrogen storage tank (212) comprising:
a multilayer composite wall (400, 402) defining a chamber (250) for the liquid hydrogen, the multilayer composite wall (400, 402) including:
an inner composite layer (412) including a plurality of reinforcing fiber tows surrounded by a matrix, the inner composite layer (412) including an inner surface defining the chamber (250);
a hydrogen barrier layer (430) formed on the inner surface of the inner composite layer (412);
an outer composite layer (414) forming an exterior of the composite hydrogen storage tank (212), the outer composite layer (414) including a plurality of reinforcing fiber tows surrounded by a matrix; and
a plurality of insulating layers (420) between the inner composite layer (412) and the outer composite layer (414).

2. The composite hydrogen storage tank (212) of claim 1, wherein the hydrogen barrier layer (430) is a metal layer.

3. The composite hydrogen storage tank (212) of claim 1 or 2, wherein the hydrogen barrier layer (430) is an inner hydrogen barrier layer (432), and the composite hydrogen storage tank (212) further comprises an intermediate hydrogen barrier layer (434) positioned between the inner composite layer (412) and the outer composite layer (414).

4. The composite hydrogen storage tank (212) of any one of claims 1 to 3, wherein one of the plurality of insulating layers (420) is a vacuum layer (350).

5. The composite hydrogen storage tank (212) of any one of claims 1 to 4, wherein the plurality of insulating layers (420) includes a plurality of low-conductivity layers including an inner low-conductivity layer (422) and an outer low-conductivity layer (424).

6. The composite hydrogen storage tank (212) of claim any one of claims 1 to 5, wherein one of the plurality of insulating layers (420) is a low-conductivity layer (422, 424).

7. The composite hydrogen storage tank (212) of claim 6, wherein the low-conductivity layer (422, 424) is a foam,
wherein the low-conductivity layer (422, 424) is a low-conductivity fabric, comprising a plurality of fiber tows, or
wherein the low-conductivity layer (422, 424) is a low-conductivity fabric comprising a plurality of fiber tows or a porous material, the low-conductivity layer having a soft vacuum with a pressure from 0.2 psi to 0.5 psi.

8. The composite hydrogen storage tank (212) of claim 6 or 7, wherein another one of the plurality of insulating layers (420) is a vacuum layer (350).

9. The composite hydrogen storage tank (212) of claim 8, wherein the vacuum layer (350) is located inward of the low-conductivity layer (424).

10. The composite hydrogen storage tank (212) of any one of claims 1 to 9, further comprising a plurality of connectors (450) positioned between the inner composite layer (412) and the outer composite layer (414).

11. The composite hydrogen storage tank (212) of claim 10, wherein the composite hydrogen storage tank (212) has a perimetric direction, the plurality of connectors (450) being spaced apart from each other in the perimetric direction.

12. The composite hydrogen storage tank (212) of claim 10 or 11, wherein the composite hydrogen storage tank (212) has a longitudinal direction, the plurality of connectors (450) being spaced apart from each other in the longitudinal direction.

13. The composite hydrogen storage tank (212) of any one of claims 10 to 12, wherein the composite hydrogen storage tank (212) has a longitudinal direction and a perimetric direction, the plurality of connectors (450) being arrayed in a plurality of linear arrays, each linear array extending in the longitudinal direction and the plurality of connectors (450) within each linear array being spaced apart from each other, each linear array of the plurality of linear arrays being spaced apart from each other in the perimetric direction.

14. The composite hydrogen storage tank (212) of any one of claims 10 to 13, wherein each connector of the plurality of connectors (450) is a composite connecter including a plurality of reinforcing fiber tows surrounded by a matrix.

15. The composite hydrogen storage tank (212) of claim 14, wherein the plurality of connectors (450) is integrally formed with the inner composite layer (412) and the outer composite layer (414).
